# EUROPÄISCHE PATENTSCHRIFT

(11) **EP 2 159 298 B1**
(45) Veröffentlichungstag und Bekanntmachung des Hinweises auf die Patenterteilung: **24.11.2010**
(21) Anmeldenummer: 08015395.0
(22) Anmeldetag: 01.09.2008
(51) Int. Cl.: C23C 2/00, F16C 13/02, F16C 19/26, F16C 23/08, F16C 33/62

(54) **Führungsrollen-Drehlagerung für ein Metallschmelzbad**
Roller bearing for a guide roll of hot-dipping bath
Palier á rouleaux pour rouleau de guidage de bain de métal en fusion

(43) Veröffentlichungstag der Anmeldung: 03.03.2010
(73) Patentinhaber: Band-Zink GmbH, 40764 Langenfeld (DE)
(72) Erfinder: Kouscheschi, Alireza, 50859 Köln (DE); Lieutenant, Roman, 47877 Willich (DE); Plätzer, Wilfried, 47809 Krefeld (DE); Plätzer, Daniel, 41751 Viersen (DE)
(74) Vertreter: Ter Smitten, Hans

(56) Entgegenhaltungen:
- EP-A- 0 610 167
- JP-A- 1 159 359
- JP-A- 2 153 055
- JP-A- 2006 214 467
- US-A1- 2003 111 777

## Beschreibung

Die Erfindung betrifft eine Führungsrollen-Drehlagerung für ein Metallschmelzbad, mit einer in der Metallschmelze in Lagervorrichtungen drehbar gelagerten Welle, wobei die Lagervorrichtungen in Schwenkarmen angeordnet sind.

Derartige Führungsrollen-Drehlagerungen werden in Beschichtungsvorrichtungen zum Beschichten eines Metallbandes in einer Schmelze eines Beschichtungsmetalles verwendet. Dabei werden die Beschichtungsvorrichtungen zum Beschichten von Metallbändern mit einer korrosionsbeständigen Schicht aus Zink, Zinn, Blei, Aluminium, Galvalume oder Galfan eingesetzt. Das Metallband wird dazu durch eine mehrere 100°C heiße Metallschmelze des betreffenden Beschichtungsmetalles hindurch gezogen. Zur Stabilisierung und zur Umlenkung sind in der Metallschmelze als Führungsrollen rotierende Wellen angeordnet. Die Lagerung der rotierenden Welle im Metallschmelzbad erfolgt dabei in als Verschleißlager ausgelegten Lagervorrichtungen. Dabei ist es aus der DE 102 36 113 B3 bekannt, eine derartige Lagervorrichtung als Gleitlagervorrichtung auszubilden. Aber auch diese Gleitlagervorrichtung weist einen relativ hohen Verschleiß- und Materialabtrag auf, was einen häufigen Austausch von Lagerteilen verursacht, der mit hohen Kosten verbunden ist.

Dokument JP 01 159359 A zeigt eine Führungsrolle-Drehlagerung mit allen Merkmalen des Oberbegriffs vom Anspruch 1. In diesem Dokument ist ein Mittelring durch scharnierähnliche Ansatzstücke mit dem Schwenkarm verbundenen, was zu einem komplizierten Ausbau des Lagers führt.

Aufgabe der Erfindung ist es daher, eine Führungsrollen-Drehlagerung zur Verfügung zu stellen, die die o. g. Nachteile vermeidet.

Diese Aufgabe wird erfindungsgemäß mit den Merkmalen des Anspruches 1 gelöst.

Die erfindungsgemäße Führungsrollen-Drehlagerung weist an den Wellenenden einer beispielsweise als Umlenkwelle ausgebildeten Führungsrolle eine Buchse auf.

Diese Buchse bildet den Innenring der Lagervorrichtung, wobei auf der Buchse in beide Richtungen axial verschiebbare Zylinderrollen als Wälzkörper angeordnet sind. Diese Wälzkörper sind in einem Mittelring durch zwei Bordorgane fixiert. Die nach außen gerichtete Oberfläche des Mittelringes ist im Längsschnitt konvex ausgeführt und liegt an einer Innenfläche eines Außenrings an, der am Schwenkarm fest angeordnet ist. Die Buchse, die Zylinderrollen, der Mittelring und der Außenring bestehen aus keramischem Material.

Auf diese Weise wird eine Führungsrollen-Drehlagerung geschaffen, die zum einen eine hohe Verschleißfestigkeit aufweist und bei der zum anderen verschlissene Lagerteile schnell und einfach ersetzt werden können. Eine besonders vorteilhafte Ausführungsform, insbesondere hinsichtlich eines möglichen Winkelversatzes der Führungsrolle ergibt sich dadurch, dass die Innenfläche des Außenringes derart im Längsschnitt konkav ausgeführt ist, dass der Mittelring linienförmig am Außenring anliegt. Damit vereint diese Drehlagerung die wesentlichen Eigenschaften eines Zylinderrollen-, Tonnen- und Pendelrollenlagers. Es ermöglicht nämlich einen Ausgleich von Fluchtfehlern und axialen Verschiebungen bei einer hohen radialen Tragfähigkeit.

Die den Innenring der Wälzlagervorrichtung bildende Buchse liegt vorteilhafterweise gegen einen Wellenabsatz an und ist an der von der Führungsrolle abgewandten Seite des Wellenendes durch ein Klemmorgan drehfest fixiert. Eine zusätzliche Erhöhung der Drehfestigkeit kann dadurch erreicht werden, dass die Buchse und das Klemmorgan formschlüssig miteinander verbunden sind.

Vorzugsweise ist in axialer Richtung, dem Wellenende gegenüberliegend eine aus keramischem Material hergestellte Anlaufscheibe vorgesehen. Diese Anlaufscheibe bildet dann ein Axiallager für das Wellenende der Führungsrolle.

Im Folgenden wird unter Bezugnahme auf die Zeichnungen ein Ausführungsbeispiel der Erfindung näher erläutert. Es zeigen:
Figur 1 eine Beschichtungsvorrichtung mit einer erfindungsgemäßen Führungsrollen-Drehlagerung in einem Metallschmelzbad in Seitenansicht, und
Figur 2 einen Längsschnitt der Wälzlagervorrichtung.

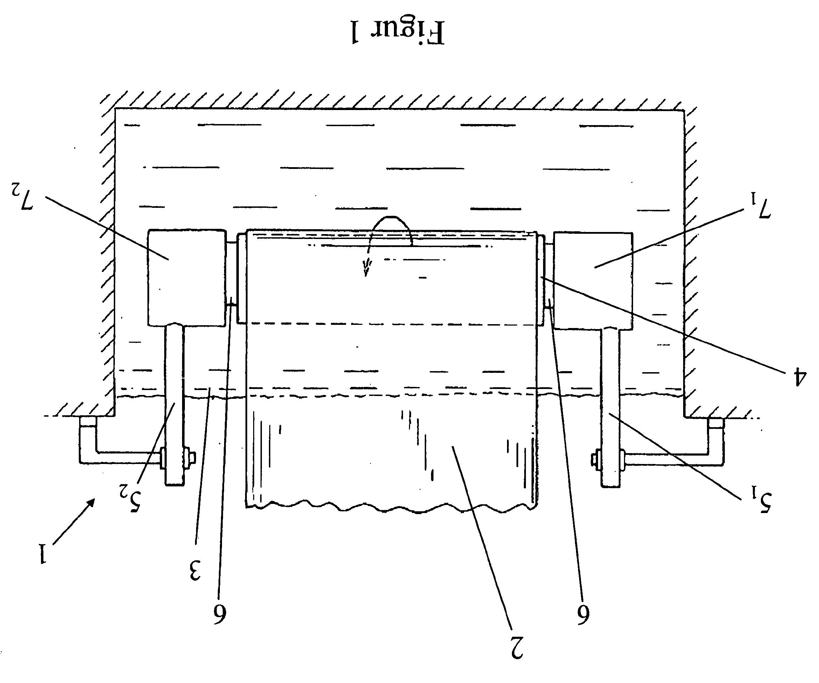

In Figur 1 ist in Seitenansicht eine Beschichtungsvorrichtung 1 zum Beschichten eines Metallbandes 2 in einem Metallschmelzbad 3 vereinfacht dargestellt. Das Metallband 2 wird durch das Metallschmelzbad 3 geleitet, um die Oberfläche des Metallbandes 2 mit einer dünnen Metallbeschichtung zu versehen.

Das Metallband 2 wird in das Metallschmelzbad 3 eingeführt und dort durch eine als drehbare Umlenkwelle 4 ausgebildete Führungsrolle senkrecht nach oben aus dem Metallschmelzbad 3 wieder heraus geführt. Die Zugkraft des Metallbandes 2 beträgt dabei zwischen 0,8 bis 6,5 t. Das Metallschmelzbad 3 besteht aus flüssigem Zink, Zinn, Blei, Aluminium, Galvalume, Galfan oder aus einem anderen zur Metallbeschichtung geeignetem Metall. Je nach Wahl des Schmelzmetalles hat das Metallschmelzbad 2 eine Temperatur von 400 °C bis 700 °C. Dabei erfolgt der Beschichtungsprozess bei Bandgeschwindigkeiten bis 250 m/min.

Die Umlenkwelle 4 wird durch zwei Schwenkarme 5₁, 5₂ in dem Metallschmelzbad 3 gehalten und ist zu Wartungs- und Reparaturzwecken aus dem Metallschmelzbad 3 heraushebbar.

An beiden eingetauchten Enden der Schwenkarme 5₁, 5₂ ist jeweils eine Wälzlagervorrichtung 7₁, 7₂ vorgesehen, in denen die jeweiligen Wellenenden 6 der Führungsrolle 4 drehbar gelagert sind.

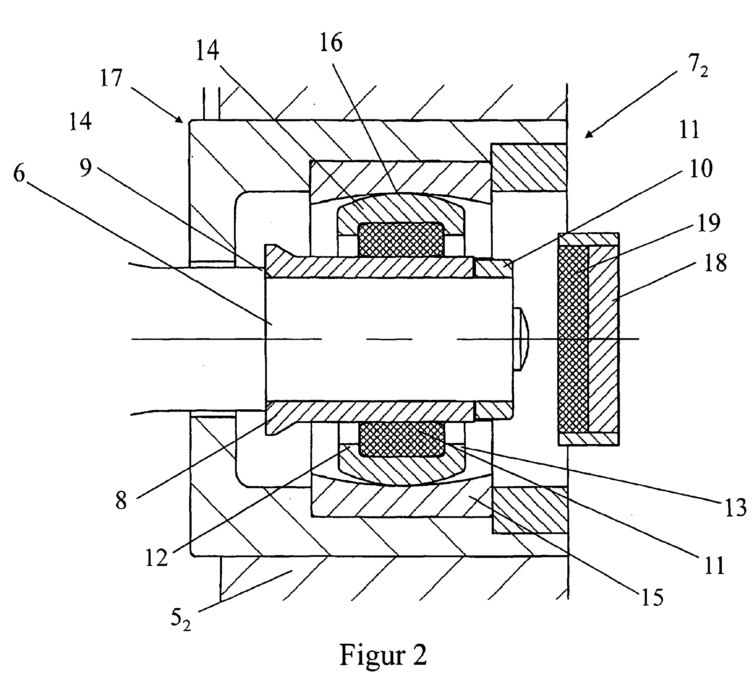

Der Aufbau der beiden Wälzlagervorrichtungen 7₁, 7₂ ist im Detail in der Figur 2 dargestellt. Das Wellenende 6 der Umlenkwelle 4 weist eine Buchse 8 auf. Diese Buchse 8 liegt gegen einen Wellenabsatz 9 an und ist mittels eines Klemmorgans 10 drehfest fixiert. Durch eine hier nicht näher dargestellte formschlüssige Verbindung wie zum Beispiel eine Verzahnung oder eine Kerbverbindung, kann die Drehfestigkeit der Buchse 8 auf dem Wellenende 6 noch weiter erhöht werden. Die Buchse 8 dient erfindungsgemäß als Innenring der Wälzlagervorrichtung 7₂. Sie steht in Wirkverbindung mit den in Axialrichtung verschiebbaren Zylinderrollen 11, die wiederum mittels Bordorganen 12 und 13 in einem Mittelring 14 gehalten sind. Der Mittelring 14 weist eine nach außen gerichtete im Längsschnitt konvexe Oberfläche auf, die mit einer konkav ausgeführten Oberfläche eines Außenrings 15 derart zusammen wirkt, dass der Mittelring 14, wie an der Stelle 16 dargestellt, linienförmig am Außenring 15 anliegt. Auf diese Weise ist sowohl eine in beide Richtungen axiale Verschiebbarkeit nämlich zwischen den Wälzkörpern 11 und der Buchse 8, als auch ein Winkelversatz, nämlich über die linienförmige Anlage des Mittelringes 14 am Außenring 15, möglich. Der Außenring 15 ist wiederum über ein zweiteilig ausgeführtes Lagergehäuse 17 fest am Schwenkarm 5₂ angeordnet.

Im vorliegenden Ausführungsbeispiel ist des Weiteren ein Axiallager 18 mit einer keramischen Anlaufscheibe 19 vorgesehen, das auf nicht dargestellte Weise mit dem Schwenkarm 5₂ verbunden ist.

## Patentansprüche

1. Führungsrollen- Drehlagerung für ein Metallschmelzbad (3), mit einer in der Metallschmelze in Lagervorrichtungen (7₁,7₂) drehbar gelagerten Welle (4), wobei die Lagervorrichtungen (7₁,7₂) an Schenkarmen (5₁,5₂) angeordnet sind, wobei die Wellenenden (6) jeweils eine Buchse (8) aufweisen, die den Innenring der Lagervorrichtung bildet, wobei auf der Buchse Zylinderrollen (11) als Wälzkörper angeordnet sind, wobei ein Mittelring (14) vorgesehen ist, dessen nach außen gerichtete Oberfläche im Längsschnitt konvex ausgeführt ist, wobei die Buchse (8), die Zylinderrollen (11) und der Mittelring (14) aus keramischen Material bestehen,
**dadurch gekennzeichnet,**
**dass** die Zylinderrollen (11) in beide Richtungen axial verschiebbar auf der Buchse (8) angeordnet sind und in dem Mittelring (14) durch zwei Bordorgane (12, 13) fixiert sind, wobei die nach außen gerichtete Oberfläche des Mittelringes (14) an einer Innenfläche eines Außenringes (15) anliegt, der über ein zweiteilig ausgeführtes Lagergehäuse (17) fest am Schwenkarm (5₁,5₂) angeordnet ist, wobei auch der Außenring (15) aus keramischem Material besteht.

2. Führungsrollen-Drehlagerung nach Anspruch 1, **dadurch gekennzeichnet, dass** die Innenfläche des Außenringes (15) derart im Längsschnitt konkav ausgeführt ist, dass der Mittelring (14) linienförmig am Außenring (15) anliegt.

3. Führungsrollen-Drehlagerung nach Anspruch 1 oder 2, **dadurch gekennzeichnet, dass** die Buchse (8) gegen einen Wellenabsatz (9) anliegt und an der von der Welle (4) abgewandten Seite des Wellenendes (6) durch ein Klemmorgan (10) drehfest fixiert ist.

4. Führungsrollen-Drehlagerung nach Anspruch 3, **dadurch gekennzeichnet, dass** die Buchse (8) und das Klemmorgan (10) formschlüssig miteinander verbunden sind.

5. Führungsrollen-Drehlagerung nach einem der vorhergehende Ansprüche, **dadurch gekennzeichnet, dass** in axialer Richtung, dem Wellenende (6) gegenüberliegend eine aus keramischem Material hergestellte Anlaufscheibe (19) vorgesehen ist.

## Claims

1. Roller bearing for a guide roll for a molten metal bath (3), comprising a shaft (4) supported for rotation in bearing devices (7₁, 7₂) in the molten metal, wherein said bearing devices (7₁, 7₂) are arranged at pivot arms (5₁, 5₂), wherein the shaft ends (6) each comprise a bushing (8) that forms the inner ring of the bearing device, wherein cylindrical rolls (11) are arranged on the bushing to act as rolling elements, wherein a central ring (14) is provided whose outward directed surface is convex in longitudinal section, wherein the bushing (8), the cylindrical rolls (11) and the central ring (14) being made of ceramic material,
**characterized in that**
the cylindrical rolls (11) are arranged on the bushing (8) for axial displacement in both directions and are fixed in the central ring (14) by two flange elements (12, 13), wherein the outward directed surface of the central ring (14) abuts an inner surface of an outer ring (15) fixedly arranged at the pivot arm (5₁, 5₂) by means of a two-part bearing housing (17), wherein the outer ring (15) is also made of ceramic material.

2. Roller bearing for a guide roll according to claim 1, **characterized in that** the inner surface of the outer ring (15) is concave in longitudinal section such that the central ring (14) abuts the outer ring (15) linearly.

3. Roller bearing for a guide roll according to claim 1 or 2, **characterized in that** the bushing (8) abuts against a shaft shoulder (9) and is fixed for rotation with the shaft by a clamping member (10) on the side of the shaft (4) averted from the shaft end (6).

4. Roller bearing for a guide roll according to claim 3, **characterized in that** the bushing (8) and the clamping member (10) are connected with a positive locking.

5. Roller bearing for a guide roll according to one of the preceding claims, **characterized in that** a thrust washer (19) of ceramic material is provided in the axial direction opposite the shaft end (6).

## Revendications

1. Palier à rouleaux pour rouleau de guidage de bain de métal en fusion (3) comprenant un arbre (4) supporté de manière rotatif dans des dispositifs de palier (7₁, 7₂) dans le métal en fusion, lesdits dispositifs de palier (7₁, 7₂) étant disposés sur des bras pivotants (5₁, 5₂), chaque extrémité de l'arbre (6) comprenant une douille (8) formant la bague intérieure du dispositif de palier, des rouleaux cylindriques (11) étant disposés sur la douille pour servir d'éléments roulants, une bague centrale (14) étant prévue dont la surface tournée vers l'extérieure est convexe en section longitudinale, ladite douille (8), les rouleaux cylindriques (11) et la bague centrale (14) étant formés d'un matériau céramique,
**caractérisé en ce que**
les rouleaux cylindriques (11) sont disposés sur la douille (8) de sorte qu'ils sont déplaçables dans les deux directions axiales et sont fixés dans ladite bague centrale (14) par deux éléments de rebord (12, 13), la surface de la bague centrale (14), tournée vers l'extérieure, contacte une surface intérieure d'une bague extérieure (15) qui est solidaire du bras pivotant (5₁, 5₂) par l'intermédiaire d'un boite de palier (17) bipartite, ladite bague extérieure (15) aussi étant formée d'un matériau céramique.

2. Palier à rouleaux pour rouleau de guidage selon la revendication 1, **caractérisé en ce que** ladite surface intérieure de ladite bague extérieure (15) est concave en section longitudinale, de sorte que la bague centrale (14) contacte ladite bague extérieure (15) linéairement.

3. Palier à rouleaux pour rouleau de guidage selon la revendication 1 ou 2, **caractérisé en ce que** ladite douille (8) s'appui sur un épaulement de
l'arbre (9) et est fixée de manière lié en rotation par un élément de serrage (10) fixant ladite douille au côté de l'extrémité de l'arbre (6) opposé à l'arbre (4)

4. Palier à rouleaux pour rouleau de guidage selon la revendication 3, **caractérisé en ce que** la douille (8) et l'élément de serrage (10) sont liés de manière positive.

5. Palier à rouleaux pour rouleau de guidage selon l'une quelconque des revendications précédentes, **caractérisé en ce qu'**une bague de portée (19) en matériau céramique est prévue opposé à ladite extrémité de l'arbre (6) vu dans la direction axiale.
